# EUROPÄISCHE PATENTSCHRIFT

(11) **EP 2 484 944 B1**
(45) Veröffentlichungstag und Bekanntmachung des Hinweises auf die Patenterteilung: **02.05.2018**
(21) Anmeldenummer: 11194513.5
(22) Anmeldetag: 20.12.2011
(51) Int. Cl.: F16K 1/42, F16K 27/02

(54) **Ventilgehäusekörper**
Valve housing body
Corps de boîtier de soupape

(30) Priorität: 02.02.2011 DE 102011003537
(43) Veröffentlichungstag der Anmeldung: 08.08.2012
(73) Patentinhaber: GEMÜ Gebr. Müller Apparatebau GmbH & Co. Kommanditgesellschaft, 74653 Ingelfingen (DE)
(72) Erfinder: Müller, Fritz, 74653 Ingelfingen (DE); Wolpert, Kal-Uwe, 74238 Krauthelm (DE); Oettinger, Nicole, 74653 Künzelsau (DE); Mayer, Peter, 74523 Schwäbisch Hall (DE)
(74) Vertreter: DREISS Patentanwälte PartG mbB

(56) Entgegenhaltungen:
- CH-A5- 572 588
- DE-A1-102005 043 008
- DE-A1-102008 062 873
- DE-A1-102008 062 874
- NL-A- 8 801 034

## Beschreibung

Die Erfindung betrifft einen Ventilgehäusekörper, insbesondere für ein Sitzventil, mit einem Einbaudurchgang für ein Stellglied für ein Schließelement, welches mit wenigstens einem Ventilsitz im Gehäuseinnenraum zusammenarbeitet, wenigstens einem Zugang und wenigstens einem Ausgang, wobei der Ventilgehäusekörper in Form einer Hohlkugel ausgelegt ist und wenigstens zwei Schalenteile umfasst, wobei eines der Schalenteile den Einbaudurchgang für das Stellglied, gegebenenfalls den Ventilsitz und den wenigstens einen Zugang oder Ausgang, und das andere Schalenteil den wenigstens einen Ausgang oder Zugang aufweist, und der Ventilgehäusekörper längs einer Trennlinie geteilt ist, die außerhalb des Einbaudurchgangs, des wenigstens einen Zugangs und des wenigstens einen Ausgangs liegt, und die Trennlinie an jedem Schalenteil einen Fügerand definiert, wobei der eine Fügerand eine radial nach innen gerichtete erste Bajonettverzahnung und der andere Fügerand eine radial nach außen gerichtete Schulter aufweist.

Aus der DE 10 2005 043 008 A1 ist ein Ventilgehäusekörper bekannt, der die Form einer Hohlkugel aufweist. Dieser Ventilgehäusekörper besteht aus zwei Schalenteilen, wobei der eine Schalenteil einen Einbaudurchgang für ein Stellglied für das Schließelement aufweist, welches mit einem Ventilsitz zusammenwirkt, der sich innerhalb der Hohlkugel befindet. Dieser Ventilsitz ist an einem Rohrende angeformt, welches das erste Schalenteil durchgreift und als Zugang beziehungsweise Stutzen ausmündet. Am zweiten Schalenteil ist der Ausgang ebenfalls als Stutzen angeformt. Die beiden Schalenteile sind miteinander verschweißt, verklammert oder über eine Flanschverbindung miteinander verschraubt. Durch eine geeignete Drehstellung des einen Schalenteils gegenüber dem anderen Schalenteil innerhalb eines Winkelbereichs von 0° bis 360° kann die Winkellage des Zugangs gegenüber dem Ausgang festgelegt werden.

Aus der DE 10 2008 062 874 A1 ist ein Ventilgehäusekörper mit zwei Schalenteilen bekannt, wobei die aneinander anliegenden Ränder Schalenteile mittels eines Heizdrahtes miteinander verbunden werden. Aus der DE 10 2008 062 873 A1 ist ein Ventilgehäusekörper mit den Merkmalen des Oberbegriffs bekannt, wobei die Schalenteile mittels einer Bajonettverriegelung miteinander verbunden sind. Vorteilhaft können die Schalenteile unterschiedliche Drehstellungen zueinander einnehmen. Eine stufenlose Veränderung der Drehstellung ist aber nicht möglich.

Der Erfindung liegt die Aufgabe zugrunde, einen Ventilgehäusekörper bereitzustellen, bei dem die beiden Schalenteile schneller, einfacher und mit größerer Variabilität miteinander verbunden werden können.

Diese Aufgabe wird mit einem Ventilgehäusekörper der eingangs genannten Art dadurch gelöst, dass zwischen die erste Bajonettverzahnung und die Schulter ein Klemmring eingreift.

Der erfindungsgemäße Ventilgehäusekörper besitzt, wie der Stand der Technik, zwei Schalenteile, die jeweils einen Fügerand aufweisen und mit ihren Fügerändern aneinander anliegen und dadurch den Ventilgehäusekörper dicht verschließen. Die Verbindung erfolgt aber nicht, wie beim Stand der Technik dadurch, dass die beiden Schalenteile direkt miteinander gekoppelt werden, sondern es wird ein Klemmring verwendet, der zwischen die erste Bajonettverzahnung und die Schulter eingelegt wird, so dass vom Klemmring und der ersten Bajonettverzahnung eine Klemmkraft erzeugt wird und die Klemmkraft dann auf die Schulter des anderen Schalenteils wirkt. Der Vorteil besteht darin, dass dieses andere Schalenteil eine gewünschte, vorgegebene Drehlage einnehmen kann und in dieser verbleibt, während die Klemmverbindung hergestellt wird. Außerdem kann mittels des Klemmrings der erforderliche Druck auf die Fügeränder aufgebracht werden, so dass die gewünschte Dichtigkeit erzeugt wird.

Bei einer bevorzugten Ausführungsform weist der Klemmring eine radial nach außen gerichtete zweite Bajonettverzahnung auf. Über die beiden Bajonettverzahnungen des einen Schalenteils und des Klemmrings kann in bekannter Art und Weise die Verklemmung hergestellt werden, an welcher das andere Schalenteil nicht beteiligt ist, so dass es beliebig verdreht werden kann. Auf das zweite Schalenteil wirkt lediglich die Klemmkraft, das zweite Schalenteil ist aber an der Erzeugung der Klemmkraft nicht beteiligt.

Bevorzugt liegt die zweite Bajonettverzahnung des Klemmringes zwischen der ersten Bajonettverzahnung und der Schulter. Durch geeignete Mittel oder Maßnahmen, über welche die Position der zweiten Bajonettverzahnung in axialer oder tangentialer Richtung verlagert wird (z.B. durch Verdrehen), kann über die zweite Bajonettverzahnung ein Druck auf die Schulter ausgeübt werden, so dass dadurch die Klemmkraft erzeugt wird.

Bei einer bevorzugten Ausführungsform weisen die erste und zweite Bajonettverzahnung eine in Umfangsrichtung sich ändernde Dicke oder Höhe auf. Dabei besitzen die erste und zweite Bajonettverzahnung gegenüber der Trennfuge geneigte Schrägflächen, die einander zugewandt sind und aneinander anliegen. Durch Verdrehen des Klemmringes kann dessen Lage bezüglich der ersten Bajonettverzahnung eingestellt werden, so dass der Klemmring der Schulter mehr oder weniger weit angenähert wird, so dass deren Schalenteil noch verdreht werden kann. Nimmt das Schalenteil die gewünschte Position ein, dann wird der Klemmring durch weiteres Verdrehen an die Schulter angepresst und dadurch die Verklemmung bewirkt. Der Klemmring ist dann zwischen der Schulter und der ersten Bajonettverzahnung eingeklemmt. Die Schulter stützt sich ihrerseits an einer Anlagefläche des anderen Schalenteils ab.

Bei einer Weiterbildung der Erfindung ist vorgesehen, dass der Klemmring einen radial nach außen gerichteten umlaufenden Rand aufweist, der die erste Bajonettverzahnung an deren Außenseite radial übergreift. Dieser übergreifende Rand überdeckt die erste Bajonettverzahnung, so dass die gesamte Verstell- und Klemmmechanik abgedeckt ist. Dabei liegt die erste Bajonettverzahnung zwischen der zweiten Bajonettverzahnung und dem umlaufenden Rand des Klemmrings, so dass sie von außen nicht sichtbar ist. Der Klemmring besitzt einen im wesentlichen C-förmigen Querschnitt.

Bei einer bevorzugten Ausführungsform der Erfindung ist der umlaufende Rand des Klemmrings an der ersten Bajonettverzahnung arretierbar oder festlegbar, insbesondere ist er mit dieser verstiftbar. Ein versehentliches Lösen oder Lockern der Klemmverbindung wird dadurch ausgeschlossen. Er kann auch durch geeignete Mittel, z.B. einer Sägeverzahnung zwischen dem umlaufenden Rand und der ersten Bajonettverzahnung, mit dieser verrastbar sein.

Bei einer bevorzugten Ausführungsform des Ventilgehäusekörpers weist das die erste Bajonettverzahnung aufweisende Schalenteil eine Aufnahmenut auf, wobei eine Seitenwand der Aufnahmenut von der ersten Bajonettverzahnung gebildet wird. An der gegenüberliegenden Seitenwand liegt die Schulter des anderen Schalenteils an. Innerhalb der Nut wird also die Verklemmung erzeugt, indem der Klemmring sich an der einen Seitenwand abstützt und gegen die Schulter in Richtung der anderen Seitenwand drückt und diese folglich an die andere Seitenwand presst.

Bei einer Weiterbildung der Erfindung wird die Schulter von die erste Bajonettverzahnung passierenden Flügeln gebildet. Auf diese Weise wird eine radial weit nach außen reichende Anlagefläche geschaffen, an welcher hohe Klemmkräfte erzeugt werden können. Das Fügen der beiden Schalenteile wird dadurch ermöglicht, dass die Flügel so bemessen sind, dass sie durch die Zahnlücken der ersten Bajonettverzahnung passen. Eine Variante sieht vor, dass die Schulter von einem die erste Bajonettverzahnung passierenden umlaufenden Rand gebildet wird. Die Abmessung des Randes ist dabei so gewählt, dass er axial an der ersten Bajonettverzahnung vorbeigeschoben werden kann.

Durch die erfindungsgemäße Ausgestaltung sind die beiden Schalenteile in jeder beliebigen Drehstellung miteinander verbindbar. Das Ventil kann mit gelöstem Klemmring montiert werden, so dass die Anschlussleitungen spannungsfrei am Ventil angeschlossen sind. Anschließend werden die beiden Schalungsteile miteinander fluiddicht verbunden.

Weitere Vorteile, Merkmale und Einzelheiten der Erfindung ergeben sich aus den Unteransprüchen sowie der nachfolgenden Beschreibung, in der unter Bezugnahme auf die Zeichnung besonders bevorzugte Ausführungsbeispiele im Einzelnen beschrieben sind. Dabei können die in der Zeichnung dargestellten sowie in der Beschreibung und/oder in den Ansprüchen erwähnten Merkmale jeweils einzeln für sich oder in beliebiger Kombination erfindungswesentlich sein.

In der Zeichnung zeigen:
- Figur 1: einen Längsschnitt durch eine erste Ausführungsform der Erfindung;
- Figur 2: eine Ansicht in Richtung des Pfeils II gemäß Figur 1 auf das obere Schalenteil;
- Figur 3: eine Ansicht in Richtung des Pfeils III gemäß Figur 1 auf das untere Schalenteil;
- Figur 4: eine Ansicht des unteren Schalenteils in Richtung des Pfeils IV gemäß Figur 3;
- Figur 5: eine perspektivische Darstellung des Klemmrings;
- Figur 6: einen Längsschnitt durch eine zweite Ausführungsform der Erfindung;
- Figur 7: eine vergrößerte Wiedergabe des Ausschnitts VII gemäß Figur 6;
- Figur 8: eine Ansicht des Unterteils der zweiten Ausführungsbeispiels in Richtung des Pfeils VIII gemäß Figur 6; und
- Figur 9: eine Ansicht in Richtung des Pfeils IX gemäß Figur 6.

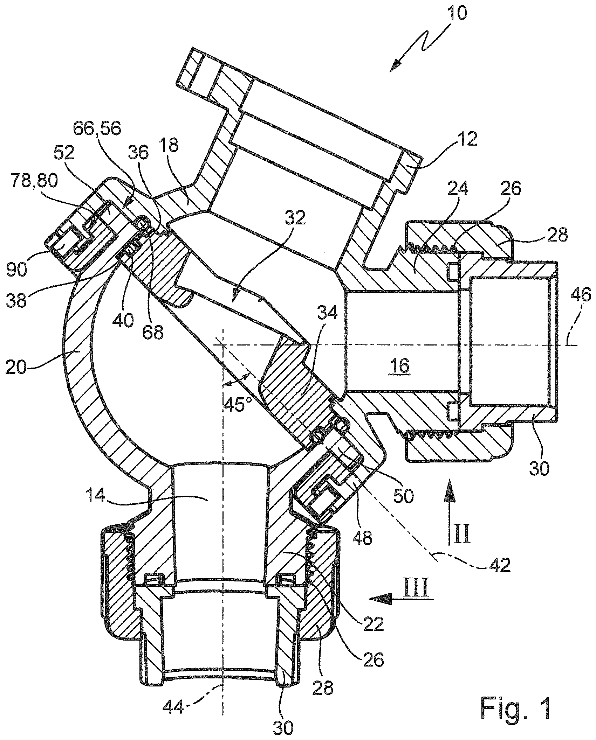

Die Figur 1 zeigt einen Vertikalschnitt durch eine bevorzugte Ausführungsform des erfindungsgemäßen, insgesamt mit 10 bezeichneten Ventilgehäusekörpers, der einen Einbaudurchgang 12 für ein (nicht dargestelltes) Stellglied für ein z.B. bezüglich des Ventilgehäusekörpers 10 radial verlagerbares Schließ- oder Drosselelement aufweist, welches ebenfalls nicht dargestellt ist. Ferner sind ein Zugang 14 und ein Ausgang 16 für das zu regelnde oder steuernde Fluid erkennbar. Der Ventilgehäusekörper 10 ist in Form einer Hohlkugel ausgebildet und besteht im Wesentlichen aus zwei Schalenteilen 18 und 20. Das erste Schalenteil 18 weist den Ausgang 16 und den Einbaudurchgang 12 zum Beispiel für einen Antrieb des Schließelements des Ventils auf. Das zweite Schalenteil 20 ist mit dem Zugang 14 versehen, wobei sowohl der Zugang 14 als auch der Ausgang 16 in Form von Stutzen 22 und 24 ausgebildet sind, die an ihren Enden ein Außengewinde 26 tragen. Auf dieses Außengewinde 26 kann eine Überwurfmutter 28 aufgeschraubt und mit dieser ein das Fluid führende Rohrende 30 an den Stutzen 22 bzw. 24 angeschlossen werden.

Innerhalb der Hohlkugel befindet sich ein Ventilsitz 32, der mit dem nicht dargestellten Ventilelement zusammenwirkt. Der Ventilsitz 32 ist in eine Scheibe 34 eingearbeitet, die von einem Sitz 36 im Schalenteil 18 aufgenommen ist. Auch das Schalenteil 20 weist einen Sitz 38 zur Aufnahme der Scheibe 34 auf. Die beiden Sitze 36 und 38 bilden quasi eine Innenumfangsnut für den Umfangsrand der Scheibe 34, der mittels einer Dichtung 40 vom Sitz 38 dicht aufgenommen wird. Die Scheibe 34 mit dem Ventilsitz 32 ist ein Kunststoff- oder Blechprägeteil, ein Druckgusselement oder ein Spritzgussteil.

Der hohlkugelförmig ausgebildete Ventilgehäusekörper 10 ist längs einer Trennlinie 42 in die beiden Schalenteile 18 und 20 aufgeteilt. Diese Trennlinie 42 verläuft bevorzugt unter einem Winkel von 45° zur Achse 44 des Stutzens 22 oder des Stutzens 24. Außerdem ist erkennbar, dass diese Trennlinie 24 weder durch den Einbaudurchgang 12 noch durch den Zugang 14 und den Ausgang 16 verläuft.

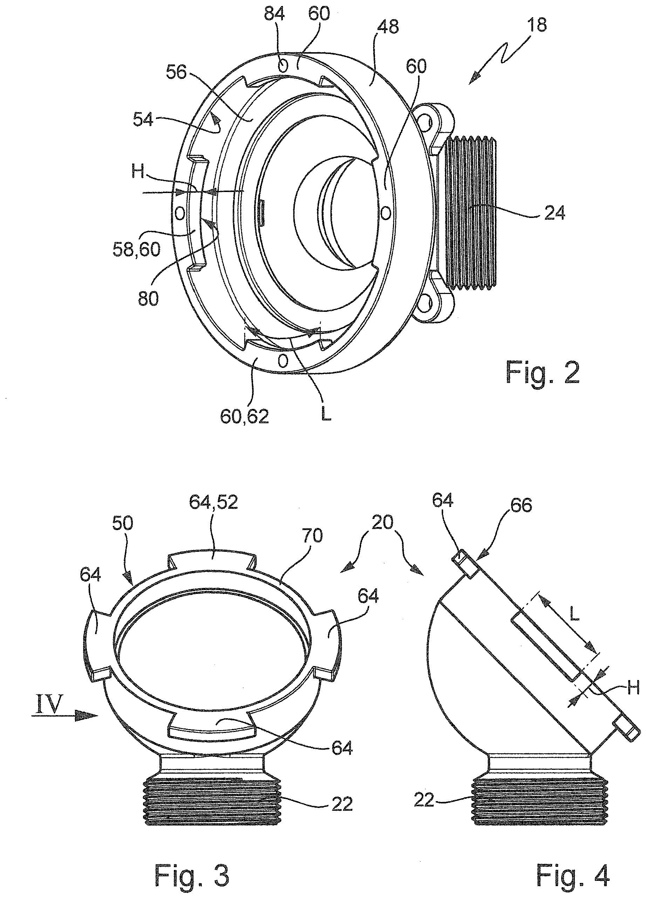

Außerdem ist erkennbar, dass die beiden Schalenteile 18 und 20 als schalenförmige Hohlkörper ausgebildet sind, wobei diese bevorzugt aus Kunststoff bestehen und vorzugsweise durch Spritzgießen hergestellt sind. Die beiden Schalenteile 18 und 20 weisen an ihrer Mantellinie 24 Fügeränder 48 und 50 auf, die einander zugewandt sind und ineinander greifen. Der Fügerand 50 des Schalenteils 20 weist eine radial nach außen abgekröpfte oder abragende Schulter 52 auf, die im Detail zu den Figuren 3 und 4 beschrieben wird.

Der Fügerand 48 des Schalenteils 18 ist deutlich in Figur 2 erkennbar und besitzt an seiner radialen Innenumfangsfläche am Fügerand 48 eine Umfangsnut 54 mit einer ersten, sich in radialer Richtung erstreckenden Seitenwand 56 und einer zweiten, dazu parallelen und sich in radialer Richtung erstreckenden Seitenwand 58. Dabei wird die zweite Seitenwand 58 von insgesamt vier radial nach innen abragenden Vorsprüngen 60 gebildet, die eine erste Bajonettverzahnung 64 bilden. Die Zähne oder Vorsprünge 60 besitzen in Richtung der ersten Seitenwand 56 gesehen eine Höhe H, die sich über deren Länge L ändert.

Die Figuren 3 und 4 zeigen das zweite Schalenteil 20 und es ist deutlich die am Fügerand 50 vorgesehene, von vier radial nach außen abragenden Flügeln oder Vorsprüngen 64 gebildete Schulter 52 erkennbar. Die Vorsprünge 60 und 64 weisen eine Querschnittsform auf, die einem sektorförmigen Abschnitt eines Kreisringes entspricht. Die Vorsprünge 64 besitzen, anders als die Vorsprünge 60, eine über ihre Länge L gleichbleibende Höhe H. Außerdem ist der Abstand der Vorsprünge 64 zueinander so gewählt dass er größer ist, als die Länge L der Vorsprünge 60 der ersten Bajonettverzahnung 62. Ferner ist die lichte Weite (Durchmesser) der Abstände zwischen den Vorsprüngen 60 der ersten Bajonettverzahnung 62 größer als der Durchmesser am Außenumfang der Schulter 52, so dass die beiden Schalenteile 18 und 20 gefügt werden können, d.h. der Fügerand 50 in den Fügerand 48 eingesetzt werden kann. Die vom Stutzen 22 abgewandte Seitenfläche 66 des Vorsprungs 64 liegt an der ersten Seitenwand 56 der Umfangsnut 54 an und die Abdichtung erfolgt über eine als O-Ring ausgebildete Dichtung 68, die in eine Nut in der ersten Seitenwand 56 eingesetzt ist und gegen den Schalenrand 70 abdichtet.

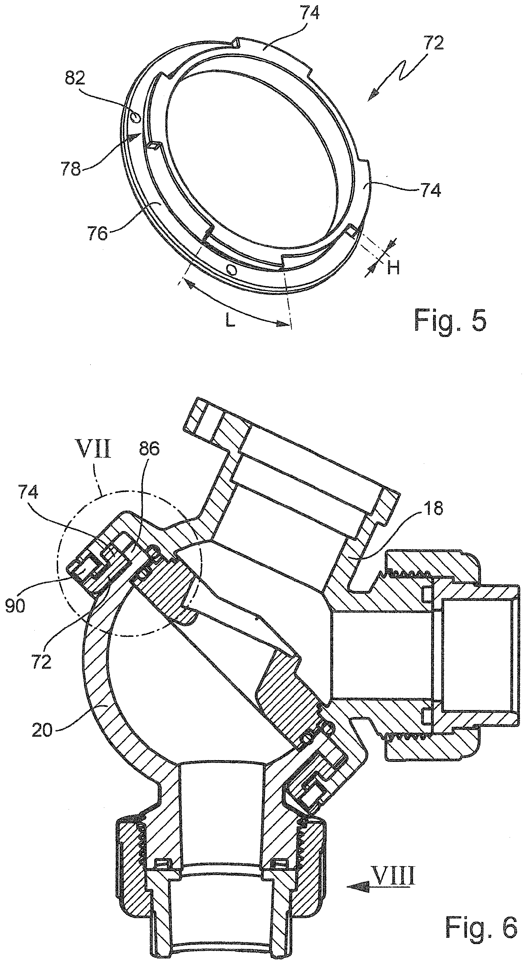

Die Figur 5 zeigt einen Klemmring 72, der einen im wesentlichen C-förmigen Querschnitt aufweist, wobei der eine C-Schenkel von einer zweiten Bajonettverzahnung 74 gebildet wird und der andere C-Schenkel als umlaufender, radial abragender Rand 76 ausgebildet ist. Es ist deutlich erkennbar, dass jeder Zahn der zweiten Bajonettverzahnung 74 über die Länge L eine sich ändernde Höhe H aufweist. Außerdem ist der Abstand der Zähne zueinander so gewählt, dass er größer ist als die Länge L der Zähne der ersten Bajonettverzahnung 62. Ferner ist die lichte Weite der Abstände zwischen den Vorsprüngen 60 der ersten Bajonettverzahnung 62 größer als der Außenumfang der zweiten Bajonettverzahnung 74, so dass die Bauteile gefügt werden können. Bei in die Umfangsnut 54 eingesetztem Klemmring 72 liegen die Schrägflächen 78 und 80 der ersten und zweiten Bajonettverzahnung 62 und 74 aneinander an. Eine Verdrehung des Klemmrings 72 bewirkt also dessen tangentiale Verlagerung in Richtung auf oder weg von der Schulter 52 des zweiten Schalenteils 20, so dass dieses entweder an die erste Seitenwand 56 angepresst oder von dieser abgehoden wird.

Der umlaufende Rand 76 weist zudem noch Löcher 82 auf, in welche Stifte 90 eingesetzt werden, so dass der Klemmring 72 mit der ersten Bajonettverzahnung 62, welche korrespondierende Löcher 84 aufweist, verstiftet und gegen Verdrehen gesichert werden kann. Der umlaufende Rand 76 überragt die erste Bajonettverzahnung 62 vollständig in radialer Richtung und deckt diese ab.

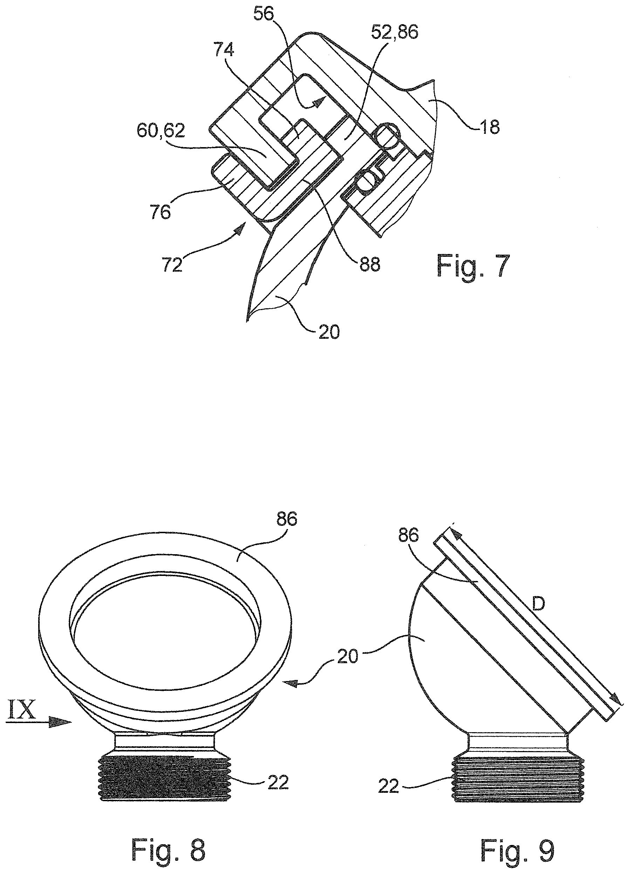

Die Figuren 6 bis 9 zeigen ein zweites Ausführungsbeispiel der Erfindung und es werden nachfolgend lediglich die sich zum ersten Ausführungsbeispiel unterscheidenden Merkmale beschrieben. Wie aus den Figuren 8 und 9 erkennbar, wird die Schulter 52 nunmehr von einem umlaufenden, radial abragenden Rand 86 gebildet, dessen Durchmesser D kleiner ist, als die lichte Weite der Vorsprünge 60 der ersten Bajonettverzahnung 62. Das zweite Schalenteil 20 kann mit seinem Rand 86 in die Umfangsnut 54 des ersten Schalenteils 18 eingesetzt werden, so dass dieser an der Seitenwand 56 anliegt. Die radiale Ausrichtung durch Anlage der Außenseite des C-Steges 88 des Klemmrings 72 an die Außenseite des zweiten Schalenteils 20 und dessen Fixierung sowohl in radialer als auch in axialer Richtung erfolgt über den Klemmring 72, der den Rand 86 an die erste Seitenwand 56 anpresst, was in der Figur 7, die eine vergrößerte Darstellung des Ausschnitts VII gemäß Figur 6 zeigt, deutlich erkennbar ist.

## Patentansprüche

1. Ventilgehäusekörper (10), insbesondere für ein Sitzventil, mit einem Einbaudurchgang (12) für ein Stellglied für ein Schließ- oder Drosselelement, welches mit wenigstens einem Ventilsitz (32) im Gehäuseinnenraum zusammenarbeitet, wenigstens einem Zugang (14) und wenigstens einem Ausgang (16), wobei der Ventilgehäusekörper (10) in Form einer Hohlkugel ausgelegt ist und wenigstens zwei Schalenteile (18, 20) umfasst, wobei eines der Schalenteile (18) den Einbaudurchgang (12) für das Stellglied, gegebenenfalls den Ventilsitz (32) und den wenigstens einen Zugang (14) oder Ausgang (16), und das andere Schalenteil (20) den wenigstens einen Ausgang (16) oder Zugang (14) aufweist, und der Ventilgehäusekörper (10) längs einer Trennlinie (42) geteilt ist, die außerhalb des Einbaudurchgangs (12), des wenigstens einen Zugangs (14) und des wenigstens einen Ausgangs (16) liegt, und die Trennlinie (42) an jedem Schalenteil (18, 20) einen Fügerand (48, 50) definiert, wobei der eine Fügerand (48) eine radial nach innen gerichtete erste Bajonettverzahnung (62) und der andere Fügerand (50) eine radial nach außen gerichtete Schulter (52) aufweist, **dadurch gekennzeichnet, dass** zwischen die erste Bajonettverzahnung (62) und die Schulter (52) ein Klemmring (72) eingreift.

2. Ventilgehäusekörper nach Anspruch 1, **dadurch gekennzeichnet, dass** der Klemmring (72) eine radial nach außen gerichtete zweite Bajonettverzahnung (74) aufweist.

3. Ventilgehäusekörper nach Anspruch 2, **dadurch gekennzeichnet, dass** die erste und zweite Bajonettverzahnung (62, 74) eine in Umfangsrichtung sich ändernde Dicke oder Höhe (H) aufweisen.

4. Ventilgehäusekörper nach Anspruch 2 oder 3, **dadurch gekennzeichnet, dass** die erste und zweite Bajonettverzahnung (62, 74)gegenüber der Trennfuge (42) geneigte Schrägflächen (78, 80) aufweisen, die einander zugewandt sind und aneinander anliegen.

5. Ventilgehäusekörper nach einem der Ansprüche 2 bis 4, **dadurch gekennzeichnet, dass** die zweite Bajonettverzahnung (74) des Klemmringes (72) zwischen der ersten Bajonettverzahnung (62) und der Schulter (52) liegt.

6. Ventilgehäusekörper nach einem der vorhergehenden Ansprüche, **dadurch gekennzeichnet, dass** der Klemmring (72) einen radial nach außen gerichteten umlaufenden Rand (76) aufweist.

7. Ventilgehäusekörper nach Anspruch 6, **dadurch gekennzeichnet, dass** der umlaufende Rand (76) des Klemmrings (72) die erste Bajonettverzahnung (62) an deren Außenseite radial übergreift.

8. Ventilgehäusekörper nach einem der Ansprüche 2 bis 5 und einem der Ansprüche 6 und 7, **dadurch gekennzeichnet, dass** die erste Bajonettverzahnung (62) zwischen der zweiten Bajonettverzahnung (74) und dem umlaufenden Rand (76) des Klemmrings (72) liegt.

9. Ventilgehäusekörper nach einem der vorhergehenden Ansprüche und nach einem der Ansprüche 6 bis 8, **dadurch gekennzeichnet, dass** der umlaufende Rand (76) des Klemmrings (72) an der ersten Bajonettverzahnung (62) festlegbar, insbesondere mit dieser verstiftbar ist.

10. Ventilgehäusekörper nach einem der vorhergehenden Ansprüche, **dadurch gekennzeichnet, dass** das die erste Bajonettverzahnung (62) aufweisende Schalenteil (18) eine Aufnahmenut (54) aufweist, und eine Seitenwand (58) der Aufnahmenut (54) von der ersten Bajonettverzahnung (62) gebildet wird und an der gegenüberliegenden Seitenwand (56) die Schulter (52) des anderen Schalenteils (20) anliegt.

11. Ventilgehäusekörper nach einem der vorhergehenden Ansprüche, **dadurch gekennzeichnet, dass** die Schulter (52) von die erste Bajonettverzahnung (62) passierenden Flügeln oder Vorsprüngen (64) oder einem umlaufenden Rand (86) gebildet wird.

12. Ventilgehäusekörper nach einem der vorhergehenden Ansprüche, **dadurch gekennzeichnet, dass** die beiden Schalenteile (18, 20) in beliebiger Drehstellung miteinander verbindbar sind.

## Claims

1. A valve body housing (10), in particular for a seat valve, having a built-in valve opening (12) for a servo component for a closing or throttling element, which component cooperates with at least one valve seat (32) in the housing interior, having at least one entrance (14) and at least one exit (16), wherein the valve body housing (10) is designed in the form of a hollow ball and includes at least two bowl parts (18, 20), wherein one of the bowl parts (18) has the built-in valve opening (12) for the servo component, optionally the valve seat (32) and the at least one entrance (14) or exit (16), and the other bowl part (20) has the at least one exit (16) or entrance (14), and the valve body housing (10) is split along a dividing line (42), which is located outside the built-in valve opening (12), the at least one entrance (14) and the at least one exit (16), and the dividing line (42) defines a joining rim (48, 50) on each bowl part (18, 20), wherein the one joining rim (48) has a radially inward-oriented first bayonet-mount toothing (62) and the other joining rim (50) has a radially outward-oriented shoulder (52), **characterized in that** a clamping ring (72) engages between the first bayonet-mount toothing (62) and the shoulder (52).

2. The valve body housing of claim 1, **characterized in that** the clamping ring (72) has a radially outward-oriented second bayonet-mount toothing (74).

3. The valve body housing of claim 2, **characterized in that** the first and second bayonet-mount toothings (62, 74) have a thickness or height (H) varying in the circumferential direction.

4. The valve body housing of claim 2 or 3, **characterized in that** the first and second bayonet-mount toothings (62, 74) have oblique faces (78, 80), inclined relative to the dividing line (42), which faces are oriented toward one another and contact one another.

5. The valve body housing of one of claims 2 through 4, **characterized in that** the second bayonet-mount toothing (74) of the clamping ring (72) is located between the first bayonet-mount toothing (62) and the shoulder (52).

6. The valve body housing of one of the foregoing claims, **characterized in that** the clamping ring (72) has a radially outward-oriented encompassing rim (76).

7. The valve body housing of claim 6, **characterized in that** the encompassing rim (76) of the clamping ring (72) fits radially over the first bayonet-mount toothing (62) on its outer side.

8. The valve body housing of one of claims 2 through 5 and one of claims 6 and 7, **characterized in that** the first bayonet-mount toothing (62) is located between the second bayonet-mount toothing (74) and the encompassing rim (76) of the clamping ring (72).

9. The valve body housing of one of the foregoing claims and of one of claims 6 through 8, **characterized in that** the encompassing rim (76) of the clamping ring (72) can be fixed, in particular pinned, to the first bayonet-mount toothing (62).

10. The valve body housing of one of the foregoing claims, **characterized in that** the first bowl part (18) having the first bayonet-mount toothing (62) has a receiving groove (54), and a side wall (58) of the receiving groove (54) is formed by the first bayonet-mount toothing (62), and on the opposite side wall (56), the shoulder (52) contacts the other bowl part (20).

11. The valve body housing of one of the foregoing claims, **characterized in that** the shoulder (52) is formed by fins or protrusions (64) passing through the first bayonet-mount toothing (62), or by a rim (86) extending all the way around.

12. The valve body housing of one of the foregoing claims, **characterized in that** the two bowl parts (18, 20) are connectable to one another in an arbitrary rotational position.

## Revendications

1. Corps de carter de soupape (10), en particulier pour une soupape à siège, comprenant un passage de montage (12) destiné à un actionneur pour un élément de fermeture ou d'étranglement, lequel coopère avec au moins un siège de soupape (32) dans l'espace intérieur du carter, au moins une entrée (14) et au moins une sortie (16), le corps de carter de soupape (10) étant réalisé sous la forme d'une sphère creuse et comportant au moins deux parties coque (18, 20), l'une des parties coque (18) comprenant le passage de montage (12) pour l'actionneur, éventuellement le siège de soupape (32) et l'entrée ou les entrées (14) ou la ou les sorties (16), et l'autre partie coque (20) comprenant la ou les sorties (16) ou l'entrée ou les entrées (14), et le corps de carter de soupape (10) étant divisé le long d'une ligne de séparation (42) qui se situe à l'extérieur du passage de montage (12), de l'entrée ou des entrées (14) et de la ou des sorties (16), et la ligne de séparation (42) définissant sur chaque partie coque (18, 20) un bord d'assemblage (48, 50), l'un des bords d'assemblage (48) comprenant une première denture à baïonnette (62) orientée radialement vers l'intérieur et l'autre bord d'assemblage (50) comprenant un épaulement (52) orienté radialement vers l'extérieur, **caractérisé en ce qu'**une bague de serrage (72) s'insère entre la première denture à baïonnette (62) et l'épaulement (52).

2. Corps de carter de soupape selon la revendication 1, **caractérisé en ce que** la bague de serrage (72) comprend une deuxième denture à baïonnette (72) orientée radialement vers l'extérieur.

3. Corps de carter de soupape selon la revendication 2, **caractérisé en ce que** la première et la deuxième denture à baïonnette (62, 74) présentent une épaisseur ou une hauteur (H) variable dans la direction périphérique.

4. Corps de carter de soupape selon la revendication 2 ou 3, **caractérisé en ce que** la première et la deuxième denture à baïonnette (62, 74) présentent des surfaces inclinées (78, 80) par rapport à la fente de séparation (42), qui sont tournées l'une vers l'autre et s'appliquent l'une contre l'autre.

5. Corps de carter de soupape selon l'une quelconque des revendications 2 à 4, **caractérisé en ce que** la deuxième denture à baïonnette (74) de la bague de serrage (72) se situe entre la première denture à baïonnette (62) et l'épaulement (52).

6. Corps de carter de soupape selon l'une quelconque des revendications précédentes, **caractérisé en ce que** la bague de serrage (72) présente un bord périphérique (76) orienté radialement vers l'extérieur.

7. Corps de carter de soupape selon la revendication 6, **caractérisé en ce que** le bord périphérique (76) de la bague de serrage (72) vient se bloquer radialement au-dessus de la première denture à baïonnette (62) par la face extérieure de celle-ci.

8. Corps de carter de soupape selon l'une quelconque des revendications 2 à 5 et l'une quelconque des revendications 6 et 7, **caractérisé en ce que** la première denture à baïonnette (62) se situe entre la deuxième denture à baïonnette (74) et le bord périphérique (76) de la bague de serrage (72).

9. Corps de carter de soupape selon l'une quelconque des revendications précédentes et selon l'une quelconque des revendications 6 à 8, **caractérisé en ce que** le bord périphérique (76) de la bague de serrage (72) peut être fixé à la première denture à baïonnette (62), en particulier peut être goupillé à celle-ci.

10. Corps de carter de soupape selon l'une quelconque des revendications précédentes, **caractérisé en ce que** la partie coque (18) comprenant la première denture à baïonnette (62) présente une rainure de réception (54), et une paroi latérale (58) de la rainure de réception (54) est formée par la première denture à baïonnette (62) et l'épaulement (52) de l'autre partie coque (20) s'applique contre la paroi latérale (56) opposée.

11. Corps de carter de soupape selon l'une quelconque des revendications précédentes, **caractérisé en ce que** l'épaulement (52) est formé par des ailettes ou des parties saillantes (64) passant par la première denture à baïonnette (62) ou par un bord périphérique (86).

12. Corps de carter de soupape selon l'une quelconque des revendications précédentes, **caractérisé en ce que** les deux parties coque (18, 20) peuvent être reliées l'une à l'autre dans une position de rotation quelconque.
